Europäisches Patentamt

European Patent Office

Office européen des brevets

(11) Publication number: **0 431 581 A2**

# EUROPEAN PATENT APPLICATION

(21) Application number: **90123295.9**

(22) Date of filing: **05.12.90**

(51) Int. Cl.⁵: **G09G 1/00, G09G 1/16, G09G 1/02**

(30) Priority: **06.12.89 US 447110**

(43) Date of publication of application:
**12.06.91 Bulletin 91/24**

(84) Designated Contracting States:
**AT BE CH DE DK ES FR GB GR IT LI LU NL SE**

(71) Applicant: **RADIUS INC.**
**1710 Fortune Drive**
**San Jose, California 95131(US)**

(72) Inventor: **Nguyen, Julien T.**
**412 Keel Lane**
**Redwood City, California 94065(US)**

(74) Representative: **Liesegang, Roland, Dr.-Ing. et al**
**FORRESTER & BOEHMERT**
**Widenmayerstrasse 4**
**W-8000 München 22(DE)**

(54) **Method and apparatus for changing the orientation of a video display.**

(57) A display monitor (7) may be pivoted into either landscape (8) or portrait (9) orientation. The orientation (8,9) of the display monitor is sensed, and the video data sent to the monitor is translated, as necessary, to maintain the displayed image unrotated regardless of the orientation of the display monitor. This translation is performed, in the case of display data represented in a bit map, by altering the addresses in memory of the data for each pixel to be displayed. The circuitry for producing the displayed images is not altered by rotation of the display monitor (7).

Figure 2

## METHOD AND APPARATUS FOR CHANGING THE ORIENTATION OF A VIDEO DISPLAY

Background and Field of the Invention

Video monitors, as used for computer displays and other applications, are typically oriented as "portrait" or "landscape" displays. A portrait display is one in which the vertical dimension of the screen is larger than the horizontal dimension, and a landscape display is one in which the horizontal dimension is larger than the vertical dimension. Movie screens and television displays have traditionally been designed in a landscape orientation, and this standard has generally been carried over into other types of video displays as well. However, a number of applications such as the representation of a printed page on a computer screen may call for a portrait, rather than landscape, orientation.

In the past, video displays or monitors have been designed for use in one orientation or another. However, the devices that operate these monitors may perform a variety of functions, some of which suggest the use of a landscape display and others of which suggest the use of a portrait display. As an example, general purpose computers might provide graphics capabilities best served by a display in landscape orientation, and word processing capabilities best served in portrait orientation. The usual result is a compromise in which one orientation of display is used for all applications. Some computer systems have also made use of two monitors, one in portrait orientation and one in landscape orientation, with the display appearing on the monitor best suited to the application involved.

Summary of the Invention

In accordance with the present invention, a single video display monitor has the capability of being physically pivoted between landscape and portrait orientations. Rather than making any change in the beam scanning electronics of the video monitor, the data supplied to the monitor is altered to match the new orientation. Thus, the user of the display may choose either the portrait or the landscape orientation, depending upon the application.

In the traditional manner, data which is to be displayed in accordance with the invention is represented by a digital "bit map." Such a map is a numeric array which indicates how each pixel of the screen is to be displayed. In the simplest case, a pixel is represented by an address to identify the pixel and one bit of data, either 0 or 1, corresponding to light or dark on the display. Thus, bit maps for such displays can be simple arrays filled with single binary digits. If other information, such as intensity or color hue, is available, then larger binary numbers may be required to describe each pixel. The bit map is traditionally stored in a "frame buffer" which is generally implemented using a special memory device called a "video Random Access Memory (RAM)." The bit map stored in the video RAM is directly supplied to the video display electronics for forming the corresponding video image.

In accordance with the invention, the bit map data supplied by a computer or other video source is intercepted before reaching the video RAM. A sensor detects whether the monitor is in portrait or landscape orientation. If the monitor is in landscape orientation, the data is passed directly on to the video RAM. If the monitor is in portrait orientation, however, the bit map addresses are translated to account for the change in orientation. For instance, the data displayed at the top of the screen remains at the top of the screen even after the monitor is physically pivoted 90 degrees.

Brief Description of the Drawings

Figure 1 is a drawing indicating the address system used for the frame buffer.

Figure 2 is a drawing of the fast and slow scan directions for the landscape and portrait orientations.

Figures 3(a) and 3(b) are drawings of frame buffer data before and after rotation from landscape orientation to portrait orientation.

Figures 4(a) and 4(b) are drawings of one embodiment of the video RAM address translation scheme of the present invention.

Figure 5 is a system block drawing showing the translation device embodying the present invention inserted in the video display of a computer system.

Figure 6 is a block diagram of one embodiment of an address translation device in accordance with the present invention.

Figure 7 is a block diagram of another embodiment of an address translation device in accordance with the present invention.

Figures 8a and 8b are block schematic diagrams of simplified address translation circuits in accordance with the present invention.

Figure 9a is a drawing illustrating the use of multiple banks of video RAM in accordance with the present invention, and figure 9b is a block drawing of a multiple video RAM bank scheme in accordance with the present invention.

Figure 10 is a drawing illustrating how the multiple video RAM bank implementation can be considered as providing several subscreens in accordance with the present invention.

Figure 11 is a drawing indicative of the manner in which data is stored in multiple-bit word video RAMs.

Figure 12 is a system block diagram of one circuit allowing high speed implementation of the present invention with a single video RAM.

Description of the Invention

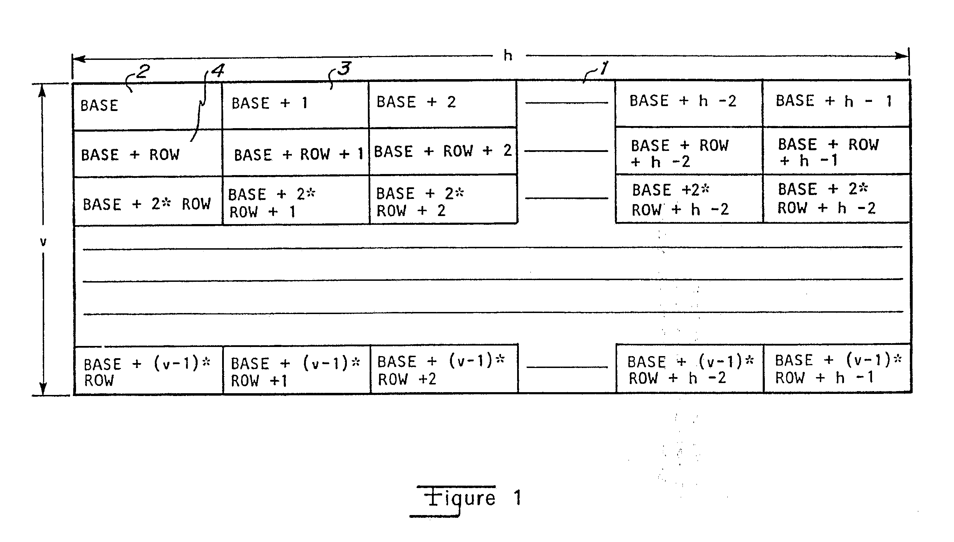

Figure 1 illustrates a standard address scheme 1 for storing a bit map in a frame buffer. If the screen is h pixels wide by v pixels high, the one-dimensional addressing scheme in Figure 1 provides that pixel addresses are incremented by one for a pixel 3 which is horizontally adjacent to the right of a given pixel 2, and by a value row (here, row = h) for a pixel 4 which is vertically adjacent below a given pixel 2.

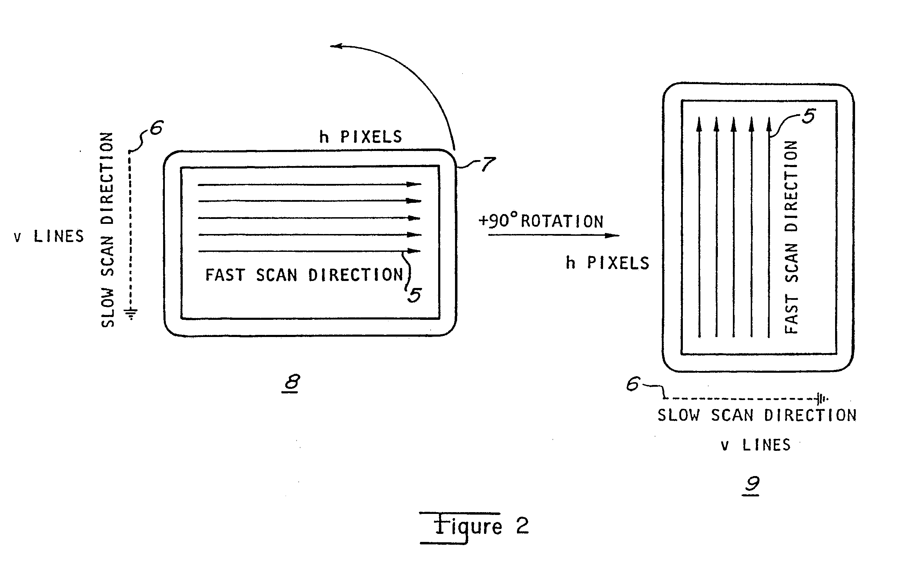

Figure 2 shows a video monitor screen 7 both before 8 and after 9 rotation from landscape to portrait orientation. In landscape orientation 8, the video monitor screen and associated video circuitry of conventional design commonly form and deflect the beam of the display generally from left to right in a fast scan direction 5 (typically at the rate of 64 kHz), and vertically from top to bottom in a slow scan direction 6 at a much slower rate (typically 60 Hz) to form a raster pattern. In accordance with the present invention, the circuitry driving the beam and the associated raster pattern are not altered by the rotation. Thus, after 90 degrees of counter-clockwise rotation 9 the fast scan direction 5 will be generally vertical from bottom to top, and the slow-scan direction will be horizontal from left to right. Since the video scanning circuitry of the monitor is not altered by the rotation, the data sent to the video display must be altered if the final screen display is to appear unrotated.

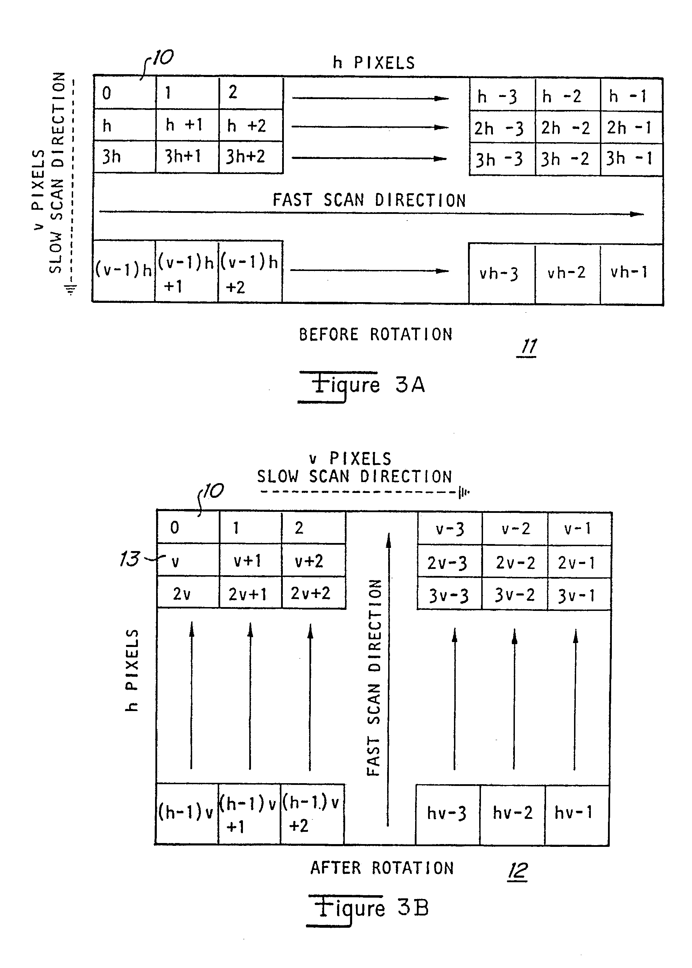

Figures 3(a) and 3(b) illustrate how the bit map of data supplied by a computer or other data source should appear in a video RAM for operation in landscape 11 and portrait 12 orientations, respectively.

Video RAM devices are commonly designed to send to a fast scan line of video display only such data as is stored in immediately adjacent addressable locations in the video RAM. Thus, implementation of the frame buffer scheme 12 of figure 3(b) in the traditional manner would not be feasible since data for adjacent pixels along the fast scan line of the display have addresses in the video RAM which are not at adjacent locations, but which are separated by (v). As an example, compare the address of data for the upper left pixel 10 with the address of data for the pixel 13 below it in the fast scan direction.

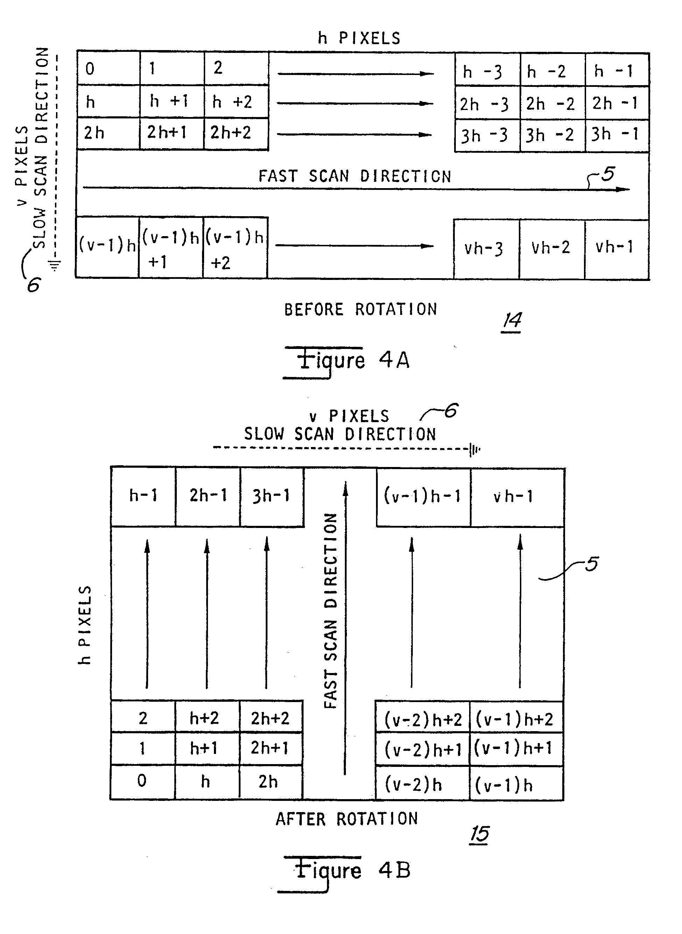

Figure 4 shows how the data in the video RAM must be organized both before rotation 14 and after rotation 15 so that the addresses of data for adjacent pixels are incremented by one along the fast scan direction 5. Because of this limitation on the addresses used in the video RAM, the addresses of data for the display pixels are altered from the addresses sent by the computer or other source in order to be properly stored in the video RAM.

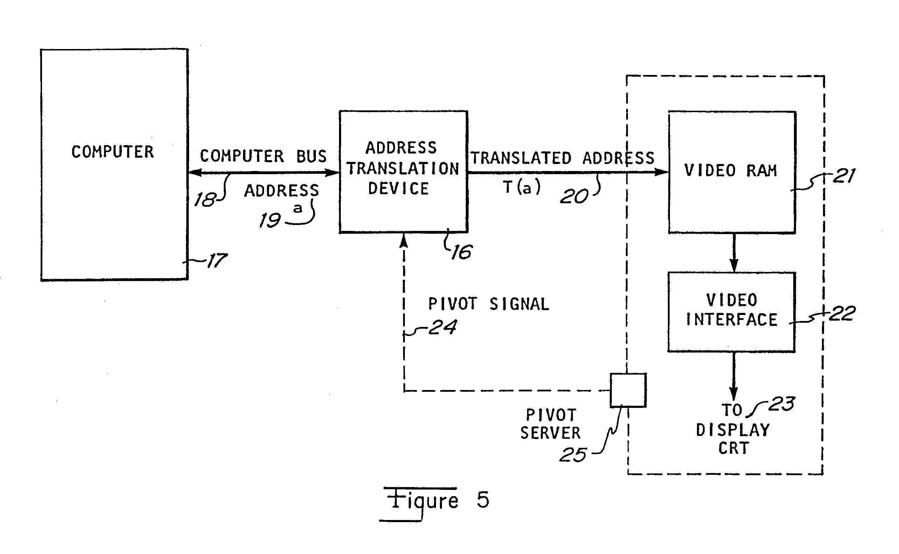

Figure 5 illustrates operation of a video display system according to the present invention. An address translation device 16 converts pixel addresses 19 provided by the computer 17 and sent over a computer bus 18 into translated addresses 20 for access to storage in the video RAM 21. The translation algorithm used by the translation device 16 is selected in response to the pivot signal 24 provided by the pivot sensor 25. Alternatively, the pivot signal could be supplied by other sources that would be evident to one skilled in the art, such as a switchbox under the user's control or even the computer supplying the video data. Using standard techniques, a sensor 25 provides a signal 24 to the address translation device 16 to indicate whether the display monitor is in the landscape orientation or in the portrait orientation. In the preferred embodiment, a mercury switch is used as the sensor 25. If the display monitor is in the landscape orientation, then the addresses 19 from the computer or other source 17 are passed along to the video RAM 21 without alteration. In mathematical terms, if "a" is the address 19 sent from the computer or other source 17, and "T(a)" is the translated address 20 sent from the address translation device 16 to the video RAM 21, then T(a) for the landscape orientation is simply:

$$T(a) = a \qquad \text{(Eq. 1)}$$

If the display screen is rotated to the portrait orientation, then address translation is required. For a counterclockwise rotation of the display monitor by 90 degrees, and starting from a frame buffer base address of 0, the address translation required is:

$$T(a) = h * (a \bmod v) + h - 1 - (a \operatorname{div} v) \qquad (Eq. \ 2)$$

where (a div v) is the quotient of the integer division of (a) by (v), and (a mod v) is the remainder of the integer division of (a) by (v).

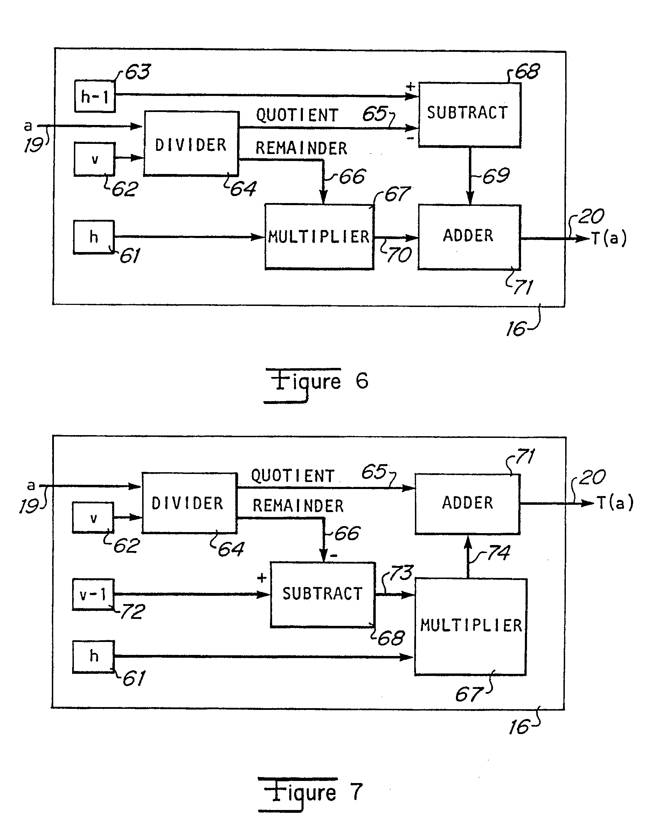

Figure 6 is a block diagram which shows one embodiment of the translation device 16 for performing the translation in accordance with equation 2. In this embodiment, the values for (h) 61, (h-l) 62 and (v) 63 are stored in the translation device 16. The input (a) 19 to the translation device 16 is divided by (v) using a divider 64. The divider 64 provides two outputs, a quotient 65 and a remainder 66. The quotient 65 is subtracted from (h-1) 63 by a subtractor 69. The remainder 66 and (h) 61 are multiplied by a multiplier 67. The output from the multiplier 70 and from the subtractor 69 are added by an adder 71 to yield the translated address 20 of equation 2.

The previous description assumed rotation of the display by 90 degrees counter-clockwise. It should be understood that other rotations are also possible in accordance with the invention. For instance, if the screen is rotated 90 degrees clockwise, the required address translation is:

$$T(a) = h * (v - 1 - (a \bmod v)) + (a \operatorname{div} v) \qquad (Eq. \ 3)$$

One embodiment of the translation device 16 for performing the transformation in accordance with equation 3 is illustrated in Figure 7. In this embodiment, the values for (h) 61, (v) 62 and (v-1) 72 are stored in the translation device 16. The input (a) 19 to the translation device 16 is divided by (v) using the divider 64. The divider 64 provides two outputs, a quotient 65 and a remainder 66. The remainder 66 is subtracted from (v-1) by the subtractor 68. The output 73 of the subtractor 68 and (h) 61 are multiplied by the multiplier 67. The output 74 of the multiplier 67 and the quotient 65 are added by an adder 71 to yield the translated address 20 of equation 3.

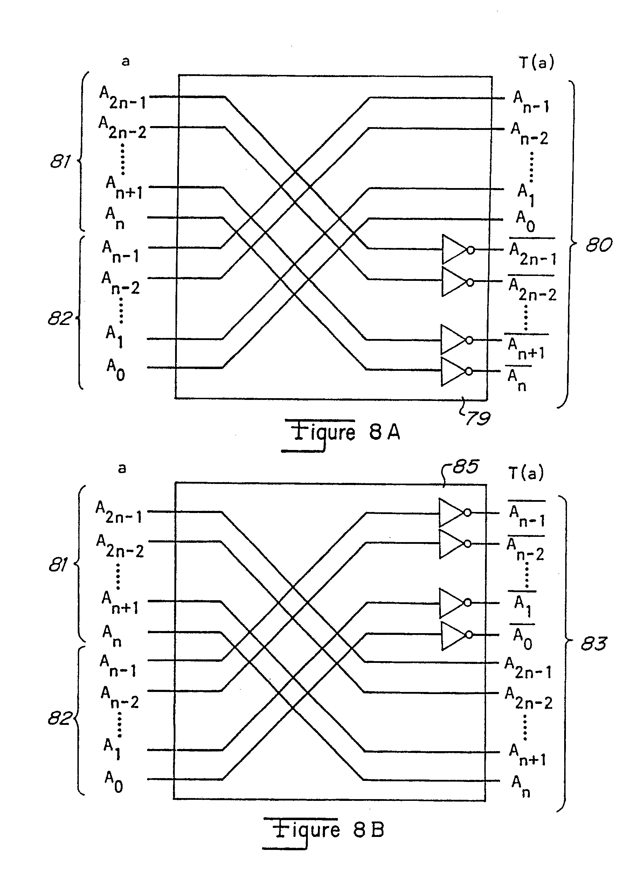

Figures 8a and 8b illustrate a simplified address translation implementation usable in the special case where the video RAM is a square array of $2^n$ elements by $2^n$ elements. In such a case, the address translation for counterclockwise rotation is simplified as follows:

4

If $a = [A_{2n-1}A_{2n-2}....A_1A_0]$, then:

$$a \bmod v = a \bmod 2^n = [A_{n-1}A_{n-2}....A_1A_0] \qquad \text{(Eq. 4)}$$

$$a \operatorname{div} v = a \operatorname{div} 2^n = [A_{2n-1}A_{2n-2}....A_{n+1}A_n] \qquad \text{(Eq. 5)}$$

$$T(a) = 2^n * [A_{n-1}A_{n-2}....A_1A_0] + 2^n -$$

$$[A_{2n-1}A_{2n-2}....A_{n+1}A_n] -1 \qquad \text{(Eq. 6)}$$

$$= [A_{n-1}A_{n-2}....A_1A_0B_{2n-1}B_{2n-2}....B_{n+1}B_n] \qquad \text{(Eq. 7a)}$$

$$\text{with } B_p = \bar{A}_p \text{ and } \bar{A}_p$$

$$\text{represents the logical}$$

$$\text{inversion of } A_p$$

Similarly, the address translation for clockwise rotation simplifies to:

$$T(a) = [B_{n-1}B_{n-2}....B_1B_0A_{2n-1}A_{2n-2}....A_{n+1}A_n] \qquad \text{(Eq. 7b)}$$

Figures 8a and 8b illustrate implementations of this translation in accordance with the present invention for counterclockwise and clockwise rotations, respectively. In Figure 8a, the translation is accomplished by transposing address bits $A_{2n-1}$ - $A_n$ 81 with address bits $A_{n-1}$ - $A_0$ 82 and inverting address bits $A_n$ - $A_{2n-1}$ 82 with inverters 79 to form a translated address 80. In Figure 8b, the translation is accomplished by transposing address bits $A_{2n-1}$ - $A_n$ 81 with address bits $A_{n-1}$ - $A_0$ 82 and inverting address bits $A_{n-1}$ - $A_0$ 82 with inverters 85 to form a translated address 83. The simplified implementation of figures 8a and 8b need not be used only in situations where the display screen itself is square. Only the video RAM need be square and of size $2^n$ by $2^n$, since a screen of any smaller size could be used by scanning only the pertinent part of the RAM to generate the display.

In accordance with the present invention, it is also possible to rotate the display to any other angle, using a sensor 25 to detect the degree of rotation and using the proper address translation, in the manner previously described. Similar translations are also possible where the frame buffer base address is not zero, either before or after rotation. For instance, if "base" is the frame buffer base address before rotation and "rbase" is the frame buffer base address after rotation, the 90 degree counter-clockwise transformation would become:

$$T(a) = rbase + h * ((a-base) \bmod v) + h - 1 -$$

$$((a-base) \; div \; v) \qquad (Eq. \; 8)$$

and the 90 degree clockwise rotation would be:

$$T(a) = rbase + h * (v - 1 - ((a-base \bmod v)) +$$

$$((a-base) \; div \; v) \qquad (Eq. \; 9)$$

In practice, most video RAMs are organized as either 64K or 256K words, where each word is four bits long. Other RAMs are available with capacity of 128K words, using words of 8 bit length. Other configurations may be available at present or in the future. One characteristic of presently available video RAMs is that access is provided only to entire words rather than individual bits. If pixels are represented by single bits, several pixels are contained in one word. A second characteristic of presently available devices is that serial access to consecutive bits in a word is typically limited to 30 MHz, which is much lower than the frequency of 50 MHz which is commonly desired for pixel information.

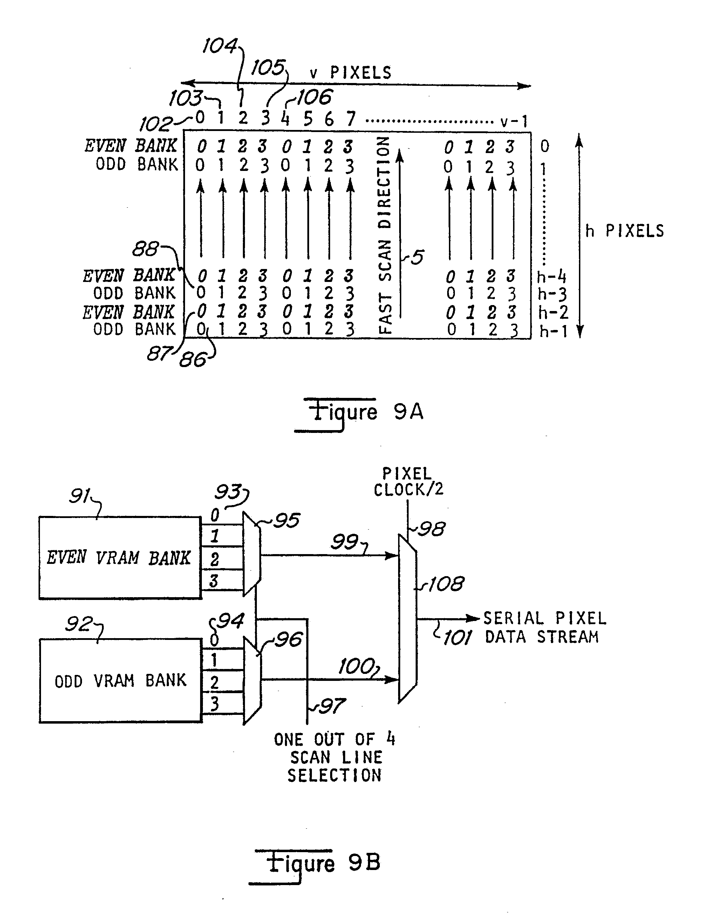

Figures 9a and 9b illustrate a scheme by which these problems are solved. In accordance with the present invention, two video RAM banks are used to double the effective pixel data stream speed. In the preferred embodiment of figure 9b, an even video RAM bank 91 and an odd video RAM bank 92 are used: Each bank provides as output four bit parallel words on lines 93, 94 respectively. Demultiplexers 95, 96 allow one of the four bits from each word to be passed on to lines 99, 100 responsive to a signal on the scan line selection line 97. The signal on line 97 is indicative of the current line being scanned in the fast scan direction 5. The line 97 causes the first bit of the words 93, 94 to be accessed while the first line 102 is being scanned. Similarly, the second bit of the words 93, 94 is accessed while the second line 103 is being scanned. Similarly, the third and fourth bits are accessed during the third and fourth scans 104,105. During the fifth scan 106, the signal on line 97 causes the first bit to be accessed once again, and so on for the rest of the fast scan lines. The line 97 thus provides a signal modulo 4 of the present scan line. A third demultiplexer 108 selects whether the bit from the output line 99 of the even video RAM bank multiplexer 95 or the bit from the output line 100 of the odd video RAM bank multiplexer 96 is sent onto the serial pixel data stream 101. This third multiplexer 108 is controlled by a signal 98 having a frequency of one half the desired pixel rate.

Figure 9a shows the result of the configuration of figure 9b. The first bit of the display 86 is marked as a non-italic zero, which indicates that it comes from the first bit of the odd video RAM bank, through demultiplexers 96 and 108. The second bit of the display 87 is shown as an italic zero, indicating that it is from the even video RAM bank 91 via demultiplexers 95 and 98. In the same fashion, the third bit of the display 88 is again from the odd video RAM bank 92 via multiplexers 96 and 108. Each video RAM bank needs only produce a new bit of pixel data for every other pixel that is displayed. Therefore, the maximum pixel transfer rate is twice the maximum video RAM speed. Once the entire first scan line has been sent, the line 97 signals the demultiplexers 95, 96 to select the next bit from the words 93, 94, and the process continues.

The illustrations of figures 9a and 9b assume four bit words and two video RAM banks, but it will be obvious to one skilled in the art that other word sizes, greater numbers of VRAM banks, and multi-bit pixel densities could be used in accordance with the present invention.

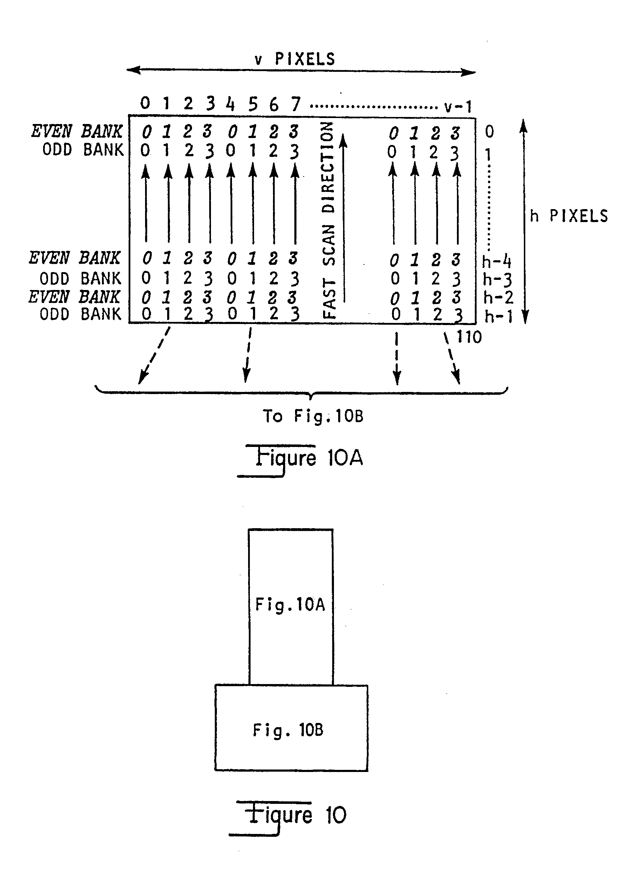

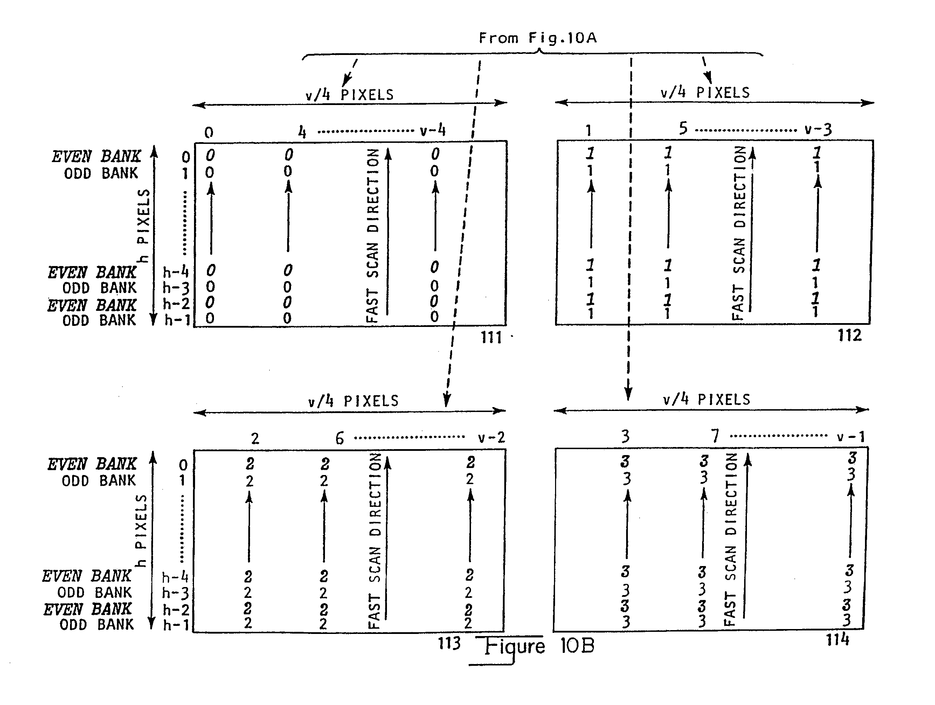

Figure 10 provides further explanation of the scheme of figures 9a and 9b. In figure 10, the screen 110 can be considered as composed of four subscreens 111, 112, 113, 114 of height h and width v/4. The video RAM words of figure 9b are four bite wide. The display produced by the first bit of these words is shown as subscreen 111. Similarly, the displays produced by the second, third, and fourth bits of these words are shown as subscreens 112, 113, and 114, respectively. For each of these subscreens 111-114, each video RAM word will contain exactly one pixel. The address translation scheme of the present invention can therefore be applied to each subscreen as follows:

$$T(a) = h * (a \bmod (v/4)) + h - 1 -$$

$$(a \operatorname{div} (v/4)) \qquad \text{(Eq. 10)}$$

for 90 degree counterclockwise rotation and

$$T(a) = h * ((v/4) - 1 - (a \bmod (v/4))) +$$

$$(a \operatorname{div} (v/4)) \qquad \text{(Eg. 11)}$$

for 90 degree clockwise rotation.

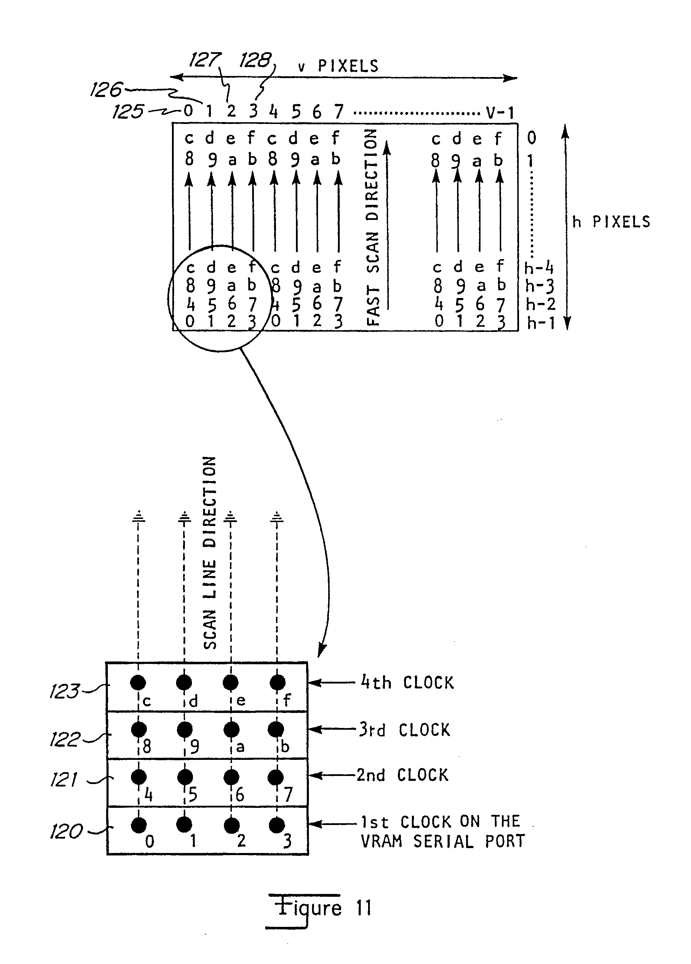

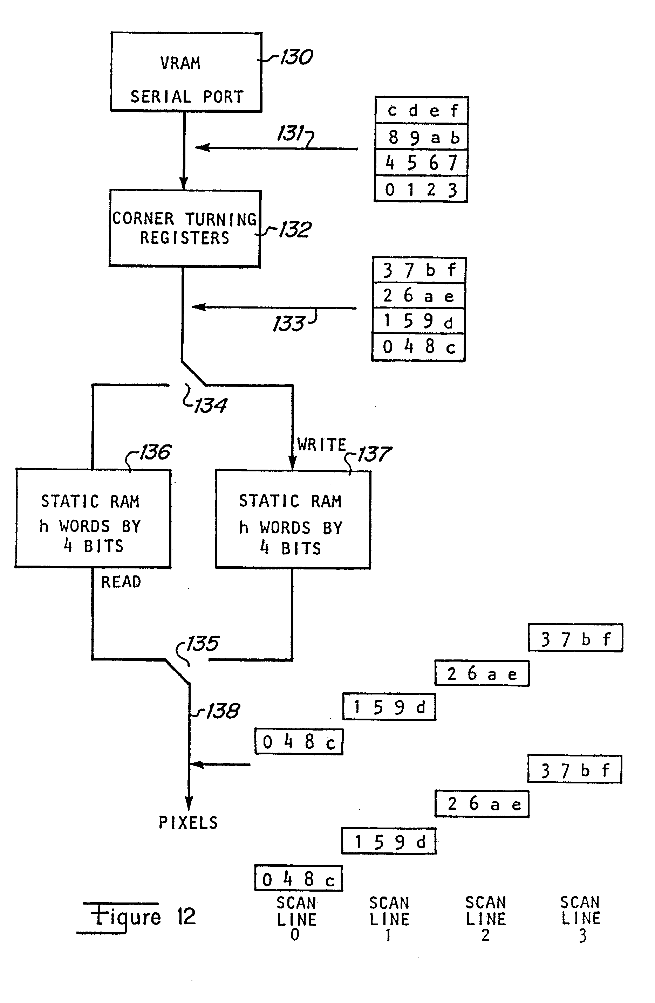

Where very fast pixel rates are required, the scheme of figures 9a and 9b would require a large number of video RAM banks. An alternate scheme not requiring as much video RAM is illustrated in figures 11 and 12. Figure 11 shows that the first clock signal on the video RAM provides a word 120 which corresponds to the first bit of each of the four first fast scan lines 125, 126, 127, 128. Similarly, the second clock signal provides a word 121 which corresponds to the second bit of each of the four first fast scan lines 125, 126, 127, 128, and so on for the words 122, 123 provided on the third and fourth clock cycles, respectively.

In figure 12, one video RAM is employed which sends out serial words 131 with each clock pulse. A set of corner turning registers 132 store four consecutive words 131 from the video RAM 130 and transpose the rows and columns of the stored words 131 to form a new set of four words 133. This set of data is written into a static memory 137. There are two such static memories, 136 and 137. A set of electronic switches 134, 135 selects one memory to be written to from the corner turning registers 133 while pixel data of the other memory is being read to the display. Depending on whether the current scan line requires the use of the first, second, third or forth bits of a video RAM word, only the corresponding word of the four words 133 will be read out of the static memory for display. As a result, four usable pixels are read out for each video RAM clock pulse, and the pixel rate is accordingly four times the video RAM rate. If the upper limit for video RAM speed is 30 MHz, this scheme allows pixel rates of up to 120 MHz.

Because the screen layouts of the portrait and landscape orientations are different, the data displayed in one orientation cannot be displayed identically in the second orientation. For instance, if text is displayed in landscape and then the orientation is changed to portrait, fewer pixels or characters of the same size will be displayable per line, since the horizontal screen dimension is shorter. In accordance with the present invention, this situation can be handled in any of a number of ways. If the present invention is used in an environment where data is displayed in variably-sized "windows" provided by an application program or by the operating system of a computer, then the windows can be automatically resized or moved to fit the new orientation. The operating system or application program can then manipulate the data in the same way as it does whenever the window size is changed (usually under a user's manual control). For instance, if the application is a word processing application program, that program may set new margins and wrap around text from the right side of one line to the next line in response to the smaller margins available in portrait orientation as compared with landscape orientation of the display monitor.

Alternatively, the portion of the display in the previous orientation which is outside of the display area in the current orientation can simply be ignored, with the user of the display being able to retrieve the undisplayed portions through conventional pagination, scrolling, or zoom/unzoom commands which are available in the computer system or other video source 17. Any portion of the display made available in the new orientation which does not have any corresponding data in the old orientation could simply be filled with gray-scale data or with some preselected pattern.

The preferred embodiment makes use of untranslated data addresses for a landscape orientation and translated data addresses for a portrait orientation, but an alternative embodiment in accordance with the present invention would be to use untranslated addresses in portrait orientation and translated addresses in landscape orientation. This could be implemented by use of a display screen having a horizontal fast scan direction when the screen is in a portrait orientation, rather than the industry standard screen which has a horizontal fast scan direction when the screen is in a landscape orientation. As long at the addressing scheme and the display screen electronics are properly matched, the selection of a "reference" orientation not requiring address translation is unconstrained.

Although the description provided above assumes that the invention is to be used with a raster scan video display, other types of displays such as stroke-generated video displays, printers, plotters and overhead projectors could be used in accordance with the invention. The invention can also be applied to other areas where access to data stored in memory is faster along a certain address path. For example, page access in dynamic random access memory is often faster than normal access, so data retrieval from this sort of memory may be accomplished more efficiently if performed in accordance with the present invention.

Therefore, the method and apparatus of the present invention provide both landscape and portrait orientations of video display using only a single video monitor without altering the electronics of the video display, but rather by translating the addresses of pixels in the video RAM.

## Claims

1. A method of translating a set of sequentially addressed correlated digital data in a computer, characterized in that the addresses of portions of the data selected responsive to the correlation of the data are read; in that the addresses of the data are altered in a predetermined manner responsive to the correlation of the data; and in that the data with the altered addresses are sequentially written responsive to the correlation of the data.

2. A method as in claim 1 for displaying a set of data as an image having upright alignment on a display screen (7) which is positionable in a plurality of orientations, further characterized in that a signal (24) is produced that is indicative of the orientation of the screen (7); in that the data set is translated in response to the signal (24); and in that the translated data set is displayed as an image having upright alignment in any of the orientations of the display screen (7).

3. A method as in claim 2, characterized in that in the translation of the data set, the data set is passed unaltered to the display screen (7) in response to the signal (24) indicative of the display screen (7) in a first preselected orientation; and in that the data set is translated according to a preselected algorithm in response to the signal (24) indicative of the display screen in a second preselected orientation.

4. A method as in claim 1, further characterized in that the addresses are altered responsive to the data retrieval rate of a data storage means.

5. A method as in claim 1, further characterized in that the predetermined manner corresponds to a mathematical rotation of the set of addressed data responsive to the correlation of the data.

6. A method as in claim 1 or 5 for displaying a set of data as an image having upright alignment on a display screen (7), further characterized in that the predetermined manner is the translation:
   $T(a) = rbase + h * ((a\text{-}base) \bmod v) + h - 1 - ((a\text{-}base) \operatorname{div} v)$
   where:
   (a) is the original address of a data point,
   T(a) is the translated address of the data point,
   rbase is a filed after-translation address base,
   base is a fixed pre-translation address base,
   v is one dimension of the screen display, and
   h is a second dimension of the screen display.

7. A method as in claim 1 or 5 for displaying a set of data as an image having upright alignment on a display screen (7), further characterized in that the predetermined manner is the translation:
   $T(a) = rbase + h * (v - 1 - (a\text{-}base \bmod v)) + ((a\text{-}base) \operatorname{div} v)$
   where:
   (a) is the original address of a data point,
   T(a) is the translated address of the data point,
   rbase is a fixed after-translation address base,
   base is a fixed pre-translation address base,
   v is one dimension of the screen display, and
   h is a second dimension of the screen display.

8. A method as in claim 1 or 5 for displaying a set of data as an image having upright alignment on a display screen (7), further characterized in that the predetermined manner is the translation:

$$T(a) = [A_{n-1}A_{n-2}....A_1 A_0 B_{2n-1} B_{2n-2}....B_{n+1}B_n]$$

where:

(a) is the original address of a data point,

T(a) is the translated address of the data point,

$a = [A_{2n-1}A_{2n-2}....A_1 A_0]$, and

$B_p = \overline{A}_p$.

9. A method as in claim 1 or 5 for displaying a set of data as an image having upright alignment on a display screen (7), further characterized in that the predetermined manner is the translation:

$$T(a) = [B_{n-1}B_{n-2}....B_1 B_0 A_{2n-1} A_{2n-2}....A_{n+1}A_n]$$

where:

(a) is the original address of a data point,

T(a) is the translated address of the data point,

$a = [A_{2n-1}A_{2n-2}....A_1 A_0]$, and

$B_p = \overline{A}_p$.

10. A method as in claim 1 for increasing the data retrieval speed of sequentially addressed correlated digital data in a computer, further characterized in that selected portions of the translated-address data are stored in a plurality of memory devices responsive to the correlation of the data; and in that translated-address data from each of the plurality of memory devices are sequentially read responsive to the correlation of the data.

11. A method as in claim 1 for increasing the data retrieval rate of a memory device wherein sequential display data has been stored as corresponding bits in adjacent words of data, characterized in that a number of adjacently-displayed data words equal to the number of data elements in one data word are retrieved as a data block; in that the resulting data block is transformed such that sequential data is stored as sequential bits in the data words; in that the resulting data words are stored in a static memory device; and in that the desired data from the static memory device is selected for display.

12. A method as in claim 13, further characterized in that a plurality of memory banks (136, 137) of the static memory device are alternatively selected to have data written to them and to have data read from them.

13. Apparatus for storing and retrieving sequentially addressed correlated digital data in a computer, characterized in that a translator alters the addresses of the data responsive to the correlation of the data; in that each of a plurality of memory devices (91, 92) stores a portion of the translated-address data to be retrieved; and in that a circuit (95-101, 108) selects and reads the translated-address data from each of the memory devices (91, 93) in sequence responsive to the correlation of the data.

14. Apparatus as in claim 13 for displaying the set of data as an image having upright alignment on a display screen (7) which is positionable in a plurality of orientations, characterized in that a circuit (25) provides a signal (24) indicative of the orientation of the screen (7); and in that a translator alters the set of data for upright-alignment display in any of the orientations of the display screen (7) responsive to the signal (24).

15. Apparatus as in claim 14, characterized in that the data is an ordered raster-scan video data bit map; and in that the translator comprises a translation device (16) disposed to accept as input the video data from a video data source and to provide as output an altered video data set to the display screen (7).

16. Apparatus as in claim 14 or 15 for manipulation of video data sets which include pixel addresses, the translator being further characterized in that a detection subsystem produces a signal responsive to the sensed orientation of the display screen; and in that a translation subsystem responsive to the signal from the detection subsystem alters pixel addresses to maintain the same alignment of the displayed video image as presented in one of the orientations when the signal indicates that the screen is in another of the orientations.

17. Apparatus as in claim 16, the translation subsystem being further characterized in that a divider (64) divides the address of a data point by one dimension of the screen display; in that a subtractor (68) subtracts the quotient of said division from one less than a second dimension of the screen display; in that a multiplier (67) multiplies the remainder of said division by the second dimension of the screen display; and in that an adder (71) adds the result of said subtraction to the result of said multiplication, the sum of which being the translated address.

18. Apparatus as in claim 16, the translation subsystem being further characterized in that a divider (64) divides the address of a data point by one dimension of the screen display; in that a subtractor (68) subtracts the remainder of said division from one less than said one dimension of the screen display; in that a multiplier (67) multiplies the result of said subtraction by a second dimension of the screen display; and in that an adder (71) adds the quotient of said division and the result of said multiplication, the sum of which being the translated address.

19. Apparatus as in claim 16, the translation subsystem being further characterized in that connection circuitry connects input signal lines transmitting input address information, output signal lines (80) transmitting output address information, and signal inverters (79) such that input address information on a first half of the input signal lines (81) is inverted by the inverters (79), the outputs of which are connected to last half of the output signal lines to provide output address information, and input address information on a last half of the input signal lines (82) is connected directly to first half of the output signal lines to provide output address information.

EP 0 431 581 A2

h

| BASE | BASE + 1 | BASE + 2 | ——— | BASE + h -2 | BASE + h - 1 |
|---|---|---|---|---|---|
| BASE + ROW | BASE + ROW + 1 | BASE + ROW + 2 | ——— | BASE + ROW + h -2 | BASE + ROW + h -1 |
| BASE + 2* ROW | BASE + 2* ROW + 1 | BASE + 2* ROW + 2 | ——— | BASE +2* ROW + h -2 | BASE + 2* ROW + h -2 |
| | | | | | |
| BASE + (v-1)* ROW | BASE + (v-1)* ROW +1 | BASE + (v-1)* ROW +2 | ——— | BASE + (v-1)* ROW + h -2 | BASE + (v-1)* ROW + h -1 |

v

Figure 1

Figure 2

h PIXELS

v PIXELS
SLOW SCAN DIRECTION

| 0 | 1 | 2 | | h −3 | h −2 | h −1 |
|-----------|-------------|-------------|---|------|------|------|
| h | h +1 | h +2 | → | 2h −3 | 2h −2 | 2h −1 |
| 3h | 3h+1 | 3h+2 | → | 3h −3 | 3h −2 | 3h −1 |

FAST SCAN DIRECTION

| (v−1)h | (v−1)h +1 | (v−1)h +2 | → | vh−3 | vh−2 | vh−1 |

10

BEFORE ROTATION

11

Figure 3A

v PIXELS
SLOW SCAN DIRECTION

h PIXELS

10

13

| 0 | 1 | 2 | | v−3 | v−2 | v−1 |
|---------|-----------|-----------|---|------|------|------|
| v | v+1 | v+2 | | 2v−3 | 2v−2 | 2v−1 |
| 2v | 2v+1 | 2v+2 | | 3v−3 | 3v−2 | 3v−1 |

FAST SCAN DIRECTION

| (h−1)v | (h−1)v +1 | (h−1)v +2 | | hv−3 | hv−2 | hv−1 |

AFTER ROTATION

12

Figure 3B

13

BEFORE ROTATION

14

Figure 4A

AFTER ROTATION

15

Figure 4B

Figure 5

EP 0 431 581 A2

Figure 6

Figure 7

16

Figure 8 A

Figure 8 B

Figure 9A

Figure 9B

18

Figure 10A

Figure 10

Figure 10B

Figure 11

Figure 12